# EUROPÄISCHE PATENTSCHRIFT

(11) **EP 1 493 019 B1**
(45) Veröffentlichungstag und Bekanntmachung des Hinweises auf die Patenterteilung: **16.08.2006**
(21) Anmeldenummer: 03720420.3
(22) Anmeldetag: 03.04.2003
(51) Int. Cl.: G01N 21/55, G01N 21/35

(54) **INFRAROTMESSVORRICHTUNG FÜR DIE SPEKTROMETRIE WäSSRIGER UND NICHT WäSSRIGER SYSTEME**
INFRARED MEASURING DEVICE FOR THE SPECTROMETRY OF AQUEOUS AND NON AQUEOUS SYSTEMS
DISPOSITIF DE MESURE A INFRAROUGE, CONU EN PARTICULIER POUR LA SPECTROMETRIE DE SYSTEMES AQUEUX ET NON AQUEUX

(30) Priorität: 03.04.2002 DE 10214780; 03.04.2002 DE 10214781
(43) Veröffentlichungstag der Anmeldung: 05.01.2005
(73) Patentinhaber: Johann Wolfgang Goethe-Universität Frankfurt am Main, 60054 Frankfurt am Main (DE)
(72) Erfinder: MÄNTELE, Werner, 63825 Blankenbach (DE); KLEIN, Oliver, 65933 Frankfurt am Main (DE); ZSCHERP, Christian, 61169 Friedberg-Ossenheim (DE); BARTH, Dr. Andreas, S-19140 Sollentuna (DE); VON LILIENFELD-TOAL, Hermann, 65371 Gelnhausen (DE); VON PROLLIUS, Hellmuth, 10967 Berlin (DE); VON GERMAR, Frithjof, 55126 Mainz (DE); OFFERMANNS, Heribert, 63457 Hanau (DE)
(74) Vertreter: Weber-Bruls, Dorothée
(86) Internationale Anmeldenummer: PCT/EP2003/003496
(87) Internationale Veröffentlichungsnummer: WO 2003/083458

(56) Entgegenhaltungen:
- EP-A- 0 884 584
- US-A- 5 434 411
- PATENT ABSTRACTS OF JAPAN Bd. 1998, Nr. 02, 30. Januar 1998 (1998-01-30) & JP 09 281102 A (TOTO LTD), 31. Oktober 1997 (1997-10-31)
- PATENT ABSTRACTS OF JAPAN Bd. 1998, Nr. 09, 31. Juli 1998 (1998-07-31) & JP 10 090271 A (KARUBE MASAO;DKK CORP), 10. April 1998 (1998-04-10)

## Beschreibung

Die vorliegende Erfindung betrifft eine Infrarotmeßvorrichtung zur Bestimmung von Inhaltsstoffen in nicht-wässrigen und wäßrigen Systemen, umfassend mindestens eine computergestützte Auswerteeinheit, mindestens einen Detektor und mindestens eine Meßeinheit, umfassend mindestens einen ATR-Körper und mindestens eine Infrarot-Lichtquelle, wobei die Meßeinheit mindesten einen ATR-Körper enthält, der mindestens zwei ebene, parallele Begrenzungsflächen umfaßt, der für die Meßstrahlung transparent oder teilweise transparent ist und der einen Brechungsindex aufweist, der größer ist als der eines an mindestens eine Begrenzungsfläche angrenzenden, zu untersuchenden Mediums, wobei die IR-Meßstrahlung an mindestens einer der ebenen, parallelen Begrenzungsflächen des ATR-Körpers mindestens sechsmal abgeschwächt totalreflektierbar ist. Des weiteren betrifft die Erfindung einen Analyseautomaten sowie die Verwendung der erfindungsgemäßen Infrarotmeßvorrichtung und des erfindungsgemäßen Analyseautomaten für die simultane, qualitative und quantitative Bestimmung von Inhaltsstoffen in insbesondere wässrigen Systemen, vorzugsweise Mehrkomponentensystemen. Außerdem betrifft die Erfindung ein Verfahren zur gleichzeitigen Bestimmung von Inhaltsstoffen in nicht-wässrigen und wässrigen Mehrkomponentensystemen.

Die Infrarotspektroskopie ist dem Fachmann hinlänglich bekannt und wird insbesondere in der organischen Chemie zur Bestimmung funktioneller Gruppen eingesetzt (s.a. Spektroskopische Methoden in der organischen Chemie, M. Hesse et. al., Georg Thieme Verlag, Stuttgart, 1984, Kapitel 2), wobei sich die Proben in allen drei Aggregatzuständen sowie im gelösten Zustand vermessen lassen. Neben dem Einsatz in der Strukturaufklärung ist auch bereits vorgeschlagen worden, IR-spektroskopische Verfahren für die Prozeßanalytik einzusetzen.

In der DE 36 05 518 A1 wird eine Meßzelle für die IR-Spektrometrie beschrieben, mit der sich auch von kleinen Probemengen Absorptions- bzw. Emissionsspektren kontinuierlich aufnehmen lassen, so daß z.B. chromatographisch aufgetrennte Probefraktionen kontinuierlich detektiert werden können. Man verwendet hierfür eine Meßzelle, die über einen sogenannten ATR-Kristall (ATR = Attenuated Total Reflection) verfügt. Als Infrarotlichtquelle kommt eine solche mit kontinuierlichem Spektrum zum Einsatz- Sobald die, eine Innenwand der Meßzelle bildende Fläche des ATR-Kristalls mit einer stationären Phase eines Chromatographieverfahrens versehen werden soll, um eine die Meßzelle durchströmende Probe zu untersuchen, wird vorgeschlagen, parallel oder nachfolgend auch ATR-Fluoreszenz-, Phosphoreszenz- oder Raman-Spektren zu messen. Um auch sehr geringe Probenmengen vermessen zu können, wird in der DE 36 05 518 A1 eine Meßzelle offenbart, deren mittlerer Bereich durch ein zusätzliches Element ausgefüllt wird, wodurch die Konstruktion dieser Meßzelle auszuwechseln. Im übrigen sind der DE 36 05 518 über die kontinuierliche Kontrolle von Chromatographieverfahren hinaus keine Hinweise zu entnehmen, ob bzw. gegebenenfalls wie sich mit der beschriebenen Meßzelle bestimmte Substanzen qualitativ oder quantitativ ermitteln lassen.

In der DE 100 15 615 A1 wird eine Meßanordnung für den Spurennachweis von gasförmigen Substanzen, die in extrem geringen Konzentrationen vorliegen, beschrieben. Hierbei handelt es sich um ein Gasmeßsystem mit einer offenen optischen Meßstrecke zur spektroskopischen Messung mindestens einer Komponente einer Gasprobe mit einer Laserquelle, enthaltend eine Referenzgasprobe für das zu messende Gas, zwei Strahlungsdetektoren für den Hauptstrahl und den Referenzstrahl und mindestens zwei Strahlungsreflektoren. Mit dem offenbarten Gasmeßsystem lassen sich z.B. optische Meßstrecken von 1 bis 200 Metern vermessen, wobei auf einen Retroreflektor verzichtet werden kann. Als Laserquellen kommen ein pulsförmige Strahlung im nahen bis mittleren Infrarotbereich emittierender Quantenkaskadenlaser oder eine im nahen Infrarotbereich im Dauerbetrieb kontinuierliche Strahlung aussendende Laserdiode, die ein stark divergentes Strahlenbündel mit einem Öffnungswinkel α von etwa 35° emittiert, zum Einsatz. Mit dem Gasmeßsystem gemäß DE 100 15 615 A1 lassen sich Gase wie Schwefelwasserstoff, Ammoniak, Salzsäure und Methan detektieren.

Gemäß DE 43 24 141 A1 lassen sich auch niedrige Isopropanol-Gehalte (< als 10%) in Feuchtemitteln für Druckmaschinen kontinuierlich bestimmen, wenn man mit einer getakteten IR-Strahlungsquelle nach einem modifiziertem Vier-Strahl-Verfahren arbeitet. Als Infrarot-Strahlungsquelle kommt wiederum eine solche mit einem kontinuierlichen Spektrum im nahen Infrarotbereich in Betracht. Weitergehende Angaben zum Infrarotmeßverfahren sind diesem Dokument ebenfalls nicht zu entnehmen.

Um die Konzentration von Inhaltsstoffen in wässrigen Flüssigkeiten verläßlich und reproduzierbar bestimmen zu können, ist gemäß DE 197 48 849 A1 der zu messende Analyt vor der Messung gezielt einer chemischen Reaktion zu unterwerfen, welche die übrigen Bestandteile der flüssigen Probe unbeeinflußt läßt. Darüber hinaus hat die chemische Reaktion mit dem Analyten derart zu sein, daß eine einwandfreie IR-spektrometrische Konzentrationsbestimmung ermöglicht wird. Wiederum werden keine anderen als die herkömmlichen, ein kontinuierliches Spektrum aufweisenden Infrarotquellen eingesetzt. Diese Vorgehensweise zur Bestimmung polarer Substanzen in wässrigen Systemen ist zudem sehr aufwendig und kostenintensiv und darüber hinaus nur auf wenige Analyte, d.h. diejenigen, die die erforderliche chemische Reaktion eingehen, beschränkt.

Bei der Herstellung von alkoholischen wie nicht-alkoholischen Getränken ist es erforderlich, die Konzentration der jeweiligen Inhaltsstoffe möglichst zu jedem beliebigen Zeitpunkt, geeigneter Weise kontinuierlich, bestimmen zu können, um Produktausschuß zu minimieren und eine möglichst hohe Qualität sicherstellen zu können. Der Gehalt an z.B. Zucker oder Alkohol in Getränken wird trotz der mittlerweile zur Verfügung stehenden, weit entwickelten spektrometrischen Verfahren heutzutage immer noch über Dichte-Messungen ermittelt. Diese Verfahren sind sehr aufwendig, erfordern eine ausgefeilte und anspruchsvolle Meßtechnik und eignen sich nur bedingt für kontinuierliche Messungen, also beispielsweise für den On-line-Einsatz.

Insbesondere bei Qualitätsweinen läßt sich zum gegenwärtigen Zeitpunkt die Frage der Echtheit der ausgewiesenen Produkte zumeist nur mit Hilfe sehr kostspieliger Techniken, wie z.B. der mehrdimensionalen NMR-Spektroskopie, verläßlich feststellen. Zudem können nur hochqualifizierte Fachleute derartige NMR-Geräte betreiben und die mit diesen erhaltenen Spektren auswerten.

Darüber hinaus sind z.B. in der medizinischen Diagnostik selbst für Routineuntersuchungen von Blut oder Urin regelmäßig größere Probemengen erforderlich, was einen hohen Materialwie auch Personalaufwand mit sich bringt, und vom behandelten Patienten wie auch vom Personal häufig als unangenehm empfunden wird.

Der DE 197 34 618 A1 ist eine Analysevorrichtung zur in-vivo-Analyse im Körper eines Patienten zu entnehmen. Hierbei handelt es sich um eine Infrarotmeßvorrichtung in Form einer in die Haut einstechbaren Kanüle, die für die Spektrometrie von interstitieller Flüssigkeit im Hautgewebe, insbesondere zum Nachweis von Glucose, konzipiert ist und sich dabei eines ATR-Körpers sowie mindestens eines Quantenkaskadenlasers bedient. Die Messung erfolgt mit Hilfe einer Lichtleitfaser, in die Strahlung eingekoppelt wird und die zumindest über einen Teilabschnitt perforiert ist, so daß interstitielle Flüssigkeit durch die Kanülenwand zu einem in der Kanüle verlaufenden Meßabschnitt der Lichtleitfaser gelangen kann. Um durch größere Moleküle wie Proteine verursachte Störeinflüsse zu vermeiden und eine hinreichende Meßgenauigkeit zu erreichen, ist gemäß der DE 197 34 618 A1 die Lichtleitfaser mit einer semipermeablen Membran zu umhüllen. Durch geeignete Abdichtungsmaßnahmen ist ferner sicherzustellen, daß die interstitielle Flüssigkeit nicht durch verbleibende Spalten in einem störenden Umfang an die Lichtleitfaser gelangen kann. Um dieses zu bewerkstelligen, sind zusätzlich Epoxyharze anzubringen. Zum Schutz der Lichtleitfaser gegen Korrosion kann diese mit einer sehr dünnen, aufgedampften Metallschicht, z.B. aus Silber, versehen sein. Die üblicherweise sehr dünnen Lichtleitfasern sind häufig nur mit aufwendigen Laserbohrverfahren zu perforieren. Bei einem Porenanteil von vorzugsweise mindestens 50% gestaltet sich die Herstellung der Kanülen gemäß der DE 197 34 618 A1 daher sehr zeit- und kostenintensiv.

Die WO 96/10198 beschreibt eine spezielle Ausgestaltung einer für die ATR-Spektroskopie geeigneten Lichtleitfaser. Diese Lichtleitfaser verfügt über einen für Strahlung durchlässigen Kern und eine diese Strahlung an ihrer Innenwand reflektierende, den Kern umgebende Hüllschicht. Entlang eines Teilabschnitts ist der Lichtleitfaser ein im wesentlichen halbzylinderförmiges Element entnommen worden, so daß diese über eine einzelne ebene Fläche verfügt, an der die eingekoppelte Strahlung totalreflektiert werden kann. Dabei ist dafür Sorge zu tragen, daß die Umhüllung über die gesamte Länge der Lichtleitfaser eine Dicke aufweist, die das evaneszente Feld der eingekoppelten Strahlung nicht in Wechselwirkung mit einem die Lichtleitfaser umgebenden Medium treten läßt, da eine gezielte Wechselwirkung nur an der ebenen Fläche des beschriebenen Teilabschnitts stattfinden soll. Weitergehende Angaben sind diesem Dokument nicht zu entnehmen.

Die EP 0 206 433 A2 offenbart eine Tauchsonde für die IR-Spektroskopie enthaltend ein Prisma, in das über Lichtleitfasern Meßstrahlung eingekoppelt werden kann. Das für die Messung verwendete Prisma hat dabei über mindestens zwei in einem Winkel zueinander angeordnete benachbarte Meßflächen zu verfügen. Um eine hinreichende Meßgenauigkeit zu erreichen, bedarf das Verfahren der EP 0 206 433 A2 zur Konzentrationsbestimmung von Substanzen Referenzmessungen mit mindestens zwei Kalibrationsmedien, in denen die zu untersuchende Substanz in bekannter Konzentration vorliegt.

Auch in der DE 198 56 951 A1 wird eine ATR-Sonde beschrieben, die ein zylindrisches Schutzgehäuse aufweist, an dessen freiem Stirnende ein Prisma angeordnet ist, das über eine mit dem zu analysierenden Medium benetzbare Fläche verfügt, an welcher ein eingekoppelter Lichtstrahl reflektiert wird. Gemäß der DE 198 56 951 A1 lassen sich fluide Medien spektroskopisch mit einer derartigen Sonde in der Weise analysieren, daß zwei separate Lichtstrahlen, die sich in ihrem Einfallswinkel auf die benetzbare Fläche des Prismas und/oder in ihrem Polarisationszustand unterscheiden, eingesetzt werden. Beispielsweise lassen sich aus den wellenlängenabhängigen Reflektionskoeffizienten für beide Winkel der Brechungsindex n und der Absorptionskoeffizient k numerisch berechnen.

Die DE 42 00 869 A1 offenbart ein Infrarotmikroskop-Spektrometer, mit dem sich auch eine spektrometrische ATR-Messung durchführen und bei dem sich die optische Achse leicht einstellen läßt.

Gemäß Hvozdara et al. (Zusammenfassung des Konferenzberichts der International Conference on advanced vibrational spectroscopy ICAVS, Turku, Finnland, August 2001) kann man unter Verwendung von Strahlung im mittleren Infrarotbereich Sensoren zur Analyse wässriger Medien einsetzen, die unter Ausnutzung des Prinzips der abgeschwächten Totalreflektion die Absorption evaneszenter Wellen ausnutzen. Auf diese Weise lassen sich z.B. auf einer geeigneten Polymerbeschichtung angereicherte Analyte untersuchen. Zwar wird angedeutet, daß sich durch den Einsatz von Quantenkaskadenlasern neue Anwendungen erschließen lassen sollten, allerdings werden über diese generelle Wunschvorstellung hinaus keine weitergehenden Angaben gemacht.

Die EP 0 670 492 A2 befaßt sich mit der Bestimmung von im Urin enthaltenen Substanzen mittels Detektion und Analyse des Absorptionsverhaltens von Strahlung im sichtbaren und im nahen Infrarotbereich mit Hilfe der multivarianten Regressionsanalyse. Hierbei werden geeignete Wellenlängen unter Beachtung eines bestimmten Korrelationskoeffizientens zwischen der Konzentration und der Absorptionsfähigkeit einer wässrigen Lösung umfassend entsprechend standardisierte wässrige Lösungen der zu untersuchenden Analyte ausgewählt.

In der DE 43 33 560 A1 wird eine Meßzelle enthaltend einen ATR-Kristall in Form einer Eintauchsonde beschrieben, die zur On-line-Kontrolle chemischer Produktionsprozesse auch unter hohem Druck und bei hoher Temperatur eingesetzt werden kann und nur einen geringen Wartungsaufwand erfordert. Dieses wird dadurch erreicht, daß vor der Meßfläche des ATR-Kristalls eine Ultraschallquelle zur Reinigung der Meßfläche von Produktrückständen angeordnet ist. Die ATR-Meßzelle gemäß DE 43 33 560 A1 ist als Einbausonde für einen chemischen Reaktor konzipiert und verfügt über eine dem Produktraum zugewandte Meßfläche sowie eine verspiegelte Rückseite. Zwecks Auswertung der Meßstrahlung wird der den ATR-Kristall verlassende Meßstrahl über ein Lichtleiterkabel einem FT-IR-Spektrometer zugeführt. Weitergehende Angaben zu den Grenzen und Möglichkeiten sowie Anwendungen, die über den Einsatz in der chemischen Verfahrenstechnik hinausgehen, sind diesem Dokument nicht zu entnehmen.

In der US 5,214,286 wird eine in der IR-Spektroskopie einsetzbare Vorrichtung beschrieben, mit der es gelingen soll, die runde Querschnittsform und Größe der bei FT-IR-Spektrometer verwendeten Strahlung an IR-Elemente anzupassen, die noch aus dispersiv arbeitenden Spektrometern stammen.

Gemäß der WO 99/05509 wird ein ATR-Körper dazu genutzt, biologische Moleküle, die sich vorzugsweise in Form einer sogenannten Monoschicht auf einer auf zumindest einer Seite des ATR-Körpers aufgebrachten, sehr dünnen Metallschicht angelagert haben, zu analysieren. Vorzugsweise wird auf Goldschichten mit einer Dicke von 5 bis 10 nm zurückgegriffen. Die dem ATR-Körper entsprechende Meßstrahlung wird vorzugsweise über ein FT-IR-Spektrometer ausgewertet.

Auch feste Körper lassen sich gemäß der WO 99/66312 unmittelbar mit Hilfe eines IR-Spektrometers basierend auf der Verwendung eines ATR-Körpers analysieren. Dabei wird der feste Probenkörper mit hohem Druck auf die Oberfläche des ATR-Kristalls gepreßt. Für eine derartige Anwendung haben sich ATR-Prismen auf der Basis von Diamantmaterialien bewährt. Um das Meßergebnis nicht durch eine abgeschwächte totalreflektierende Wechselwirkung mit der Anpreßvorrichtung zu verfälschen, ist zwischen dem die Meßstrahlung ein- und auskoppelnden Prisma und dem dem Meßmedium zugewandten ATR-Körper großflächig eine Reflexionsschicht eingearbeitet, die nur ein- und ausgekoppelte Strahlen durchläßt. Auf die Messung flüssiger oder anderer Systeme mit Hilfe der dargestellten IR-Spektrometervorrichtung wird in der WO 99/66312 an keiner Stelle eingegangen.

In der EP 0 652 301 A1 wird ein Plasmabeschichtungsverfahren zur Herstellung einer dünnen diamantähnlichen Kohlenstoffbeschichtung mit Hilfe einer pyrolytischen Graphitkathode beschrieben. Allerdings finden sich in diesem Dokument keinerlei Hinweise, daß unter den beschriebenen Bedingungen der Plasmabeschichtung ebenfalls hochwertig beschichtete ATR-Körper zugänglich sind.

Die EP 0 884 584 A1 betrifft eine Infrarotmeßvorrichtung, enthaltend ein ATR-Prisma, mit der Enzymreaktionen sowie deren Kinetik verfolgt werden. Über eine geeignete Auswerteeinheit werden die Differenzen zwischen dem Hintergrundspektrum der Strahlungsquelle und der nach Durchtritt durch das ATR-Prisma detektierten Strahlung ermittelt. Mit dieser Vorrichtung läßt sich z.B. die Lipase-katalysierte Hydrolyse von Olivenöl über eine Zeitdauer von 20 Minuten verfolgen. Die der der Meßlösung ausgesetzte Oberfläche des ATR-Prismas kann gemäß der EP 0 884 584 A1 mit Teflon beschichtet sein,

Aus der US 5,434,411 geht ein Infrarotmeßgerät hervor, umfassend ein ATR-Prisma, eine Strahlungsquelle und ein Probebehältnis, das auf der mit der Meßfläche des ATR-Prismas in Kontakt stehenden MeBfläche über eine Beschichtung verfügt, durch die evaneszente Strahlung noch hindurchtreten kann und die die Intensität einer Komponente des elektrischen Feldes der Infrarotstrahlung verstärkt. Diese Beschichtung umfaßt eine Metallage und eine Lage aus organischem Material, wobei letztere zwischen der Metallage und der Meßfläche des ATR-Prismas angeordnet ist. Für die organische Lage kann auf Polyvinylchlorid, Cellulose, Polyurethane und Silikone Zurückgegriffen werden. Durch die Verwendung der genannten mehrlagigen Beschichtung läßt sich die Meßempfindlichkeit erhöhen.

Es wäre daher wünschenswert, auf Vorrichtungen und Verfahren zurückgreifen zu können, mit denen sich auch geringe und auch sehr geringe Mengen an Inhaltsstoffen in insbesondere wässrigen Systemen qualitativ wie quantitativ auf einfache Weise sehr genau und schnell bestimmen.

Der vorliegenden Erfindung lag daher die Aufgabe zugrunde, eine Meßvorrichtung zu finden, die einfach herzustellen und zu handhaben ist, sich darüber hinaus durch äußerste Robustheit auch im Dauerbetrieb, z.B. unter Produktionsbedigungen bei der Herstellung von Getränken, sowie durch äußerste Präzision bei der qualitativen sowie quantitativen Bestimmung von hahaltsstoffen in Flüssigkeiten auszeichnet Ferner lag der Erfindung die Aufgabe zugrunde, mehrere nebeneinander in einer wässrigen Flüssigkeit vorliegende Inhaltsstoffe oder Bestandteile, insbesondere auch solche polarer Natur, gleichzeitig bzw. nahezu gleichzeitig analysieren zu können.

Demgemäß wurde eine Infrarotmeßvorrichtung gemäß den Merkmalen des Anspruchs 1 gefunden. Die ebene Begrenzungsfläche des ATR-Körpers verfügt demnach vorteilhafterweise über eine durchgehende, einheitliche Meßstrecke, innerhalb derer ein Meßstrahl mindestens zweimal abgeschwächt totalreflektierbar ist, d.h. mit einem angrenzenden Medium wechselwirken kann.

Bevorzugterweise sind die ebenen, im wesentlichen parallelen Begrenzungsflächen im wesentlichen unverspiegelt bzw. vollständig unverspiegelt ausgestaltet, verfügen also nicht über eine verspiegelte Fläche oder grenzen nicht an eine solche an.

Quantenkaskadenlaser, die für die erfindungsgemäße Meßvorrichtung geeignet sind, sind z.B. aus der EP 0 676 839 A sowie aus der US 5,509,025 bekannt, in denen deren grundsätzliche Funktionsweise sowie deren Aufbau beschrieben werden. Erfindungsgemäß wird auf Quantenkaskadenlaser zurückgegriffen, die elektromagnetische Strahlung im mittleren Infrarotbereich abstrahlen. Für die erfindungsgemäße Infrarotmeßvorrichtung kommen z.B. solche Quantenkaskadenlaser in Betracht, die nur eine definierte Frequenz aus dem Mittel-Infrarotbereich abstrahlen, wie auch solche, die zwei, drei, vier, fünf oder mehrere Frequenzen aus dem Mittel-Infrarotbereich abstrahlen können. Ferner kann auch auf solche Quantenkaskadenlaser zurückgegriffen werden, die definierte Frequenzbänder abstrahlen. Selbstverständlich können diese Infrarotmeßvorrichtungen auch nicht nur mit einem, sondern mit zwei oder mehreren der vorhergehend beschriebenen Quantenkaskadenlaser ausgerüstet sein. Sofern in einer erfindungsgemäßen Meßvorrichtung ein Quantenkaskadenlaser zum Einsatz kommt, der in der Lage ist, elektromagnetische Strahlung mindestens zweier unterschiedlicher Frequenzen aus dem Mittel-Infrarotbereich abzustrahlen oder sofern mehrere Quantenkaskadenlaser in einer solchen Meßvorrichtung nebeneinander zum Einsatz kommen, kann die elektromagnetische Strahlung, insbesondere wenn sie unterschiedliche Frequenzen aufweist, zeitgleich oder nahezu zeitgleich oder auch in zeitlicher Abfolge abgestrahlt werden. Auf diese Weise ist es möglich, das spektrometrische Verhalten einer Substanz in einer Probe umfassend zu charakterisieren. Des weiteren ist es möglich, mehrere in einer Probe vorliegende Inhaltsstoffe in kürzester Zeit, d.h. gleichzeitig oder nahezu gleichzeitig, zu untersuchen. Nahezu zeitgleich bzw. gleichzeitig im Sinne der vorliegenden Erfindung bedeutet, daß Signale so geringfügig zeitlich versetzt abgestrahlt werden, daß aus den jeweils detektierten Absorptionssignalen keine signifikanten Unterschiede gegenüber den bei absolut gleichzeitig ausgesendeter Strahlung detektierten Absorptionssignalen zu erkennen sind.

In einer bevorzugten Ausführungsform wird von dem eingesetzten Quantenkaskadenlaser elektromagnetische Strahlung in Form von Pulsen mit definierter Zeitdauer und/oder Intensität emittiert. Diese Pulsdauer und Intensität sind in weiten Bereichen frei wählbar und können dazu benutzt werden, um für jeden zu untersuchenden Inhaltsstoff optimierte spektrometrische Untersuchungsbedingungen zu erzeugen. So können, wenn mehrere Inhaltsstoffe in einer Probe vermessen werden sollen, je nach Frequenz der emittierten elektromagnetischen Strahlung unterschiedlich lange Pulsdauern und/oder unterschiedlich starke Intensitäten gewählt werden. Beispielsweise können Inhaltsstoffe mit schwach absorbierenden Chromophoren Pulsen längerer Pulsdauer ausgesetzt werden, während bei stark absorbierenden Substanzen sehr kurze Pulsdauern ausreichen, um ein zufriedenstellendes Signal detektieren zu können. Bereits dieses unterschiedliche Absorptionsverhalten kann für die Analyse verwendet werden und in einer in Wirkverbindung mit einem Detektor stehenden Auswerteeinheit zwecks sofor tigen Abgleichs abgespeichert bzw, in geeignete Analyseprogramme eingebunden werden. Demgemäß ist es mit der erfindungsgemäßen Infrarotmeßvorrichtung möglich, elektromagnetische Strahlung unterschiedlicher Frequenz, entweder ausgehend von nur einem Quantenkaskadenlaser oder aber durch Verwendung mehrerer Quantenkaskadenlaser, in beliebiger Abfolge, beispielsweise in sequentieller Folge abzustrahlen. Dieses trifft insbesondere auch auf die vorhergehend beschriebene gepulste Strahlung zu.

Über die freie Wahl der Pulsfolge der abgestrahlten Frequenzen der elektromagnetischen Strahlung können erfindungsgemäß Pulsmuster und/oder Intensitätsmuster verwendet werden, die auf das jeweilige Analyseproblem zugeschnitten sind. Beispielsweise können bei Kenntnis oder begründeter Vermutung der in einer Flüssigkeit vorliegenden bzw. möglicherweise vorliegenden Inhaltsstoffe die Frequenzen, Pulsdauern und/oder Intensitäten derart vorgegeben werden, daß sich über die Art und den Umfang der detektierten Signale mit Hilfe einer computergestützten Auswerteeinheit ohne weiteres ermitteln läßt, welche Inhaltsstoffe in welchen Konzentrationen in der untersuchten Probe vorliegen. Diese Muster an Pulsabfolge, Pulslänge und/oder Pulsintensität von zwei oder mehreren Frequenzen können wiederum dazu genutzt werden, bestimmte Muster an Antwortsignalen zu erzeugen, die für bestimmte Zusammensetzungen charakteristisch sind. Auf diese Weise ist es möglich, innerhalb von kürzester Zeit festzustellen, ob bzw. in welcher Konzentration bestimmte Inhaltsstoffe in einer Probe vorliegen. Besonders bevorzugt wird demgemäß elektromagnetische Strahlung unterschiedlicher Frequenz und/oder Intensität nach einem Multiplex-Muster, insbesondere pulsweise, abgestrahlt. Hierbei kann zum einen auf bekannte Multiplex-Spektrometer oder elektrische Multiplexer, die vorrangig detektorseitig zum Einsatz kommen, zurückgegriffen werden. Zum anderen werden erfindungsgemäß bevorzugt auch solche Multiplexer eingesetzt, die nicht nur den Detektor beeinflussen bzw. wellenlängenspezifisch steuern, sondern die auch die zu emittierenden Wellenlängen und/oder Intensitäten auswählen und die Ausstrahlungsabfolge bzw. das Ausstrahlungsmuster steuern. Der erfindungsgemäß zum Einsatz kommende Multiplexer steuert bzw. regelt gemäß einer weiteren Ausführungsform zusätzlich auch die Intensität der jeweiligen Meßstrahlung, insbesondere in Abhängigkeit vom jeweiligen Meßproblem. Diese sogenannten optischen Multiplexer koordinieren somit die Strahlungsquelle und den Detektor und stimmen diese aufeinander ab. Derartige Multiplexer schalten dabei unter anderem Meßstrahlung nach einer auf das Meßproblem zugeschnittenen Pulsfolge ein und aus, insbesondere unter wellenlängenabhängiger Modulierung der Intensität, und steuern folglich die Lichtquelle. Die detektierten Signale werden vorzugsweise mit Hilfe bekannter Methoden wie der Faktoranalyse, den Multiple Least Square Algorithmen oder der neuronalen Netzwerk-Analyse ausgewertet. Hierfür wird regelmäßig auf computergestützte Auswerteeinheiten zurückgegriffen.

Darüber hinaus ist es unter Verwendung von Quantenkaskadenlasern möglich, nicht nur Strahlung unterschiedlicher Frequenzen und/oder Intensitäten in bestimmter zeitlicher Abfolge durch den ATR-Körper zu senden, Vielmehr kann man ebenfalls unterschiedliche Frequenzen zeitgleich abstrahlen, wobei insbesondere Anzahl und Frequenz der emittierten Strahlung fortwährend variiert werden können. Auf diese Weise lassen sich Frequenzmuster zusammenstellen, die charakteristische Absorptionssignale für zu untersuchende Zusammensetzungen generieren, wodurch Vielkomponentenmischungen, insbesondere auch in wässrigen Systemen, in kurzer Zeit analysiert werden können. Die vorhergehend beschriebene Analysemethode kann auch mit Matrix-Codierung/Matrix-Dekodierung bezeichnet werden.

Als Detektoren für die Registrierung der Meßstrahlung kann auf alle gängigen, in Infrarotmeßvorrichtungen zum Einsatz kommenden Systeme zurückgegriffen werden.

Für die Aufbereitung bzw. Auswertung kommen dem Fachmann hinlänglich bekannte computergestützte Auswerteeinheiten in Betracht. Eine Auswerteeinheit im Sinne der vorliegenden Erfindung kann auch einen Datenspeicher und/oder eine Anzeigeeinheit, z.B. einen Schreiber oder einen Bildschirm, umfassen. Diese Elemente können selbstverständlich auch separat vorliegen.

In einer bevorzugten Ausführungsform verfügt die erfindungsgemäße Meßvorrichtung über eine auswechselbare Auswerteeinheit. Beispielsweise kann eine erste Auswerteeinheit gegen eine zweite oder weitere Auswerteeinheit ausgetauscht werden. Dieses kann sowohl nach Beendigung einer ersten Messung bzw. einer in sich abgeschlossenen Messung als auch während eines Meßvorgangs geschehen, z.B. wenn man feststellt, daß eine gesuchte Verbindung nicht vorliegt oder sich hat ohne weiteres nachweisen lassen, so daß im folgenden die Suche nach einem weiteren Inhaltsstoff in Angriff genommen werden kann. Dieses hat den Vorteil, daß z.B. auf einer ersten Auswerteeinheit ein Auswertungsprogramm für ein bestimmtes Analyseproblem vorliegt, das bei Änderung der Analyseaufgabenstellung gegen eine zweite bzw. weitere Auswerteeinheit mit einem auf die neue Aufgabenstellung zugeschnittenen Auswertungsprogramm ausgewechselt werden kann. Bevorzugt liegen die Auswerteeinheiten in Form von Auswertemodulen vor, mit denen sich auf einfache Weise Wirkverbindungen mit der erfindungsgemäßen Meßvorrichtung, insbesondere mit dem Detektor, herstellen lassen, z.B. in Form von Einsteck- oder Einschiebmodulen. Als vorteilhaft hat sich erwiesen, die jeweiligen Auswerteeinheiten durch unterschiedliche Form- und/oder Farbgebung unterscheidbar zu machen. Des weiteren können zwei oder mehrere Auswerteprogramme auf einer Auswerteeinheit vorliegen, die in einer Ausführungsform je nach Bedarf freischaltbar sind. Über die Auswerteeinheit läßt sich beispielsweise auch der Multiplexer beeinflussen oder ansteuern. Mit der Auswerteeinheit kann somit auch Einfluß genommen werden auf die Strahlungsquelle(n) bzw. für ein bestimmtes Analyseproblem eine Frequenzwahl, Pulsfolge und Intensitätszuweisung der abgestrahlten Meßstrahlung vorgegeben werden.

Die in der erfindungsgemäßen Infrarotmeßvorrichtung zum Einsatz kommende Meßeinheit enthält mindestens einen ATR-Körper. ATR-Körper werden im Stand der Technik auch als ATR-Kristalle bezeichnet, wenngleich diese Systeme nicht notwendigerweise in Kristallform vorliegen müssen. Demgemäß stellt z.B. auch gesintertes Silberchlorid einen funktionstüchtigen ATR-Körper/-Kristall dar. Grundsätzlich sind vorliegend solche ATR-Körper geeignet, die für die Meßstrahlung ganz oder teilweise transparent sind.

Als Material für den verwendeten ATR-Körper kommt jedes beliebige Material in Frage, das für die verwendete Strahlung, insbesondere für elektromagnetische Strahlung im Mittel-Infrarotbereich, transparent ist und das darüber hinaus stark lichtbrechend bzw. hochbrechend ist und über einen Brechungsindex verfügt, der größer ist als der von Luft und/oder als der eines mit der erfindungsgemäßen Infrarotmeßvorrichtung zu analysierenden bzw. analysierbaren Mediums. Geeignete Materialien für den ATR-Körper umfassen Diamant, Saphir, Cadmiumtellurid, Thalliumbromid-Jodid, Silizium, Germanium, Zinkselenid, Zinksulphid, Magnesiumdifluorid, Cäsiumjodid, Silberchlorid, Kalziumdifluorid, Kaliumbromid oder Natriumchlorid. Für den Fachmann ist ersichtlich, daß bestimmte der vorgehend genannten Materialien aufgrund ihrer Wasserlöslichkeit für die Vermessung wässriger Systeme nicht in Betracht kommen, z.B. ein ATR-Körper aus Natriumchlorid. In einer weiteren Ausführungsform wird auf ATR-Körper aus einem für Infrarotstrahlung transparenten Werkstoff, insbesondere einem Polymerwerkstoff, mit einem Brechungsindex vorzugsweise ≥ 1.5, insbesondere aus Polyethylen, zurückgegriffen.

Der ATR-Körper bildet vorzugsweise mit mindestens einer ebenen Begrenzungsfläche eine Seitenwand der Meßeinheit bzw. -zelle. Unter der Maßgabe, daß der ATR-Körper über zwei ebene, im wesentlichen parallele Begrenzungsflächen verfügt, kann dieser ATR-Körper ansonsten in beliebiger Geometrie vorliegen, solange diese zuläßt, daß ein einfallender Strahl derart justiert werden kann, daß dieser vor seinem Austritt aus dem ATR-Körper insgesamt mindestens zweimal oder dreimal, bevorzugt mindestens sechsmal, vorzugsweise mindestens siebenmal an einer oder mehreren ebenen, im wesentlichen parallelen Begrenzungsflächen abgeschwächt totalreflektiert worden ist. Mit sechs oder sieben solcher Totalreflexionen werden bereits optimale Analyseergebnisse hinsichtlich Empfindlichkeit, Genauigkeit und Schnelligkeit auch für wässrige Mehrkomponentensysteme erzielt. Dabei hat der ATR-Körper in Form und Größe derart ausgestaltet zu sein, daß die mindestens sechs oder sieben abgeschwächten Totalreflexionen entlang einer Meßstrecke stattfinden. Unter Meßstrecke wird vorliegend derjenige Abschnitt des ATR-Körpers verstanden, der in Kontakt mit dem zu analysierenden Medium tritt und der insgesamt für abgeschwächte Totalreflexionen zur Verfügung steht.

In einer weiteren Ausführungsform bestehen mindestens zwei Begrenzungsflächen der Meßeinheit oder -zelle, insbesondere sich gegenüberliegende Wände der Meßzelle, aus jeweils einem ATR-Körper, insbesondere jeweils einen ATR-Körper enthaltend mindestens zwei ebene, im wesentlichen parallele Begrenzungsflächen. Darüber hinaus kann auch die gesamte Meßzelle aus einem ATR-Körper gefertigt sein.

In einer weiteren Ausgestaltung stellt die Meßzelle eine Durchflußzelle dar. Diese hat den Vorteil, daß z.B. auch Prozeßabläufe in unterschiedlichsten Herstellungsverfahren, vorzugsweise im On-line-Modus, untersucht werden können. Diese Durchflußzellen eignen sich besonders für den Einsatz in der Prozeßanalytik und in der Untersuchung von Körperflüssigkeiten, z.B. Blut.

Darüber hinaus ist es möglich, die Meßzelle bzw. den ATR-Körper auch als Tauchsonde auszugestalten, um z.B. Probensysteme, die sich anderweitig schlecht oder überhaupt nicht vermessen lassen, mit Hilfe der erfindungsgemäßen Infrarotmeßvorrichtung zu analysieren. Eine derartige Tauchsonde eignet sich insbesondere auch für Stichprobenkontrollen in unterschiedlichsten Verfahren, bei denen wässrige wie auch nicht-wässrige Systeme zum Einsatz kommen. Beispielsweise können bei Verwendung einer Tauchsonde auf einfache Weise Urin, Blut, Fruchtsäfte, Bier, Spirituosen, Wein, Waschlaugen oder Abwasser auf Inhaltsstoffe, z.B. polare Substanzen wie Saccharide, z.B. Glucose, Alkohole, z.B. Ethanol, oder Phosphorsäureester, untersucht werden. Des weiteren gelingt die Analyse von Inhaltsstoffen in Milch und Milchprodukten wie Quarkspeisen oder Joghurt, ohne daß es einer besonderen Aufbereitung dieser Produkte bedürfte.

In einer weiteren Ausführungsform ist wenigstens eine Begrenzungsfläche des ATR-Körpers, die dem zu analysierenden Medium aussetzbar bzw. ausgesetzt ist, mit einer Beschichtung versehen, die für die Meßstrahlung transparent ist. Insbesondere wenn die Beschichtung eine Stärke aufweist, die geringer ist als die Wellenlänge der verwendeten Meßstrahlung, kann auf jedwedes für die Meßstrahlung transparente Beschichtungsmaterial zurückgegriffen werden. Die Dicke bzw. Stärke der Beschichtung ist dagegen unkritisch, wenn es sich bei dem Beschichtungsmaterial um ein solches für einen ATR-Körper handelt, d.h. in etwa eine Brechzahl aufweist, die der des jeweils eingesetzten ATR-Körpers entspricht. Beispielsweise kann ein ATR-Material wie Zinksulfid oder Zinkselenid, das besonders bevorzugt für die erfindungsgemäß eingesetzten ATR-Körper verwendet wird, mit einer Schicht aus Diamant versehen werden. Man erhält auf diese Weise einen mit einer äußerst widerstandsfähigen und inerten Beschichtung versehenen ATR-Körper. Besonders bevorzugt wird die Diamantschicht nach einem von H. J. Neubert in Optics, Februar 2002, Seite 11, beschriebenen Verfahren aufgetragen. Danach wird mit Hilfe eines Kohlendioxidlasers mit einer Leistung von etwa 6 bis 7 kW in der Nähe einer Oberfläche eine Temperatur im Bereich von 15.000 bis 20.000°C erzeugt. Durch Einleiten von Argon in diesen Bereich wird ein Plasma erzeugt. Gibt man gasförmige Kohlenwasserstoffe, beispielsweise Methan, in dieses Plasma werden freie Kohlenstoffatome gebildet, die sich auf einem Substrat, im vorliegenden Fall auf eine ebene Begrenzungsfläche eines ATR-Körpers, unter Ausbildung einer Diamantschicht sehr geringer Stärke niederschlagen lassen. Von Vorteil ist die vorhergehend beschriebene Beschichtung insbesondere bei Materialien für ATR-Körper, die toxisch, löslich, z. B. im Probenmedium, und/oder empfindlich gegenüber mechanischer Beanspruchung sind. Besonders geeignet für die erfindungsgemäße Meßvorrichtung sind ATR-Körper aus Zinksulfid oder Zinkselenid, die mit einer Beschichtung, insbesondere einer Diamantbeschichtung, versehen sind.

In einer bevorzugten Ausgestaltung verfügt die Beschichtung des ATR-Körpers der erfindungsgemäßen Infrarotmeßvorrichtung über eine Stärke, die geringer ist als die, vorzugsweise halbe, Wellenlänge der verwendeten Infrarot-Meßstrahlung, insbesondere über eine Stärke im Bereich von etwa 2 nm bis etwa 25 µm, besonders bevorzugt von etwa 2 µm bis etwa 12 µm sowie insbesondere bei etwa 5 µm. Ein geeigneter Beschichtungsstärkenbereich erstreckt sich somit auch von 2 nm bis 12 µm. Die Dicke der Beschichtung liegt besonders bevorzugt in einem Bereich von etwa einem Viertel der Meßwellenlänge. Ferner empfiehlt es sich, eine Beschichtung einzusetzen, die hinsichtich Dicke und Zusammensetzung homogen ist und eine möglichst glatte Oberfläche aufweist. Dabei ist es von Vorteil, wenn die Unebenheiten in der Beschichtung das Ausmaß von etwa einem Viertel der Meßwellenlänge im Durchschnitt nicht überschreiten. Geeigneterweise wird auf solche Beschichtungen zurückgegriffen, die die Meßstrahlung nicht, auch nicht partiell, reflektieren. Die Beschichtung erfüllt eine Doppelfunktion, indem sie einerseits das Meßmedium vor einer Kontamination mit, gegebenenfalls toxischem, ATR-Körper-Material sowie andererseits den ATR-Körper vor mechanischer Beschädigung schützt. Bei der Untersuchung von wässrigen Systemen haben sich insbesondere Beschichtungen bewährt, die eine Diffusion von Wassermolekülen durch diese Schicht zu dem ATR-Körper nicht zulassen.

In einer weiteren bevorzugten Ausführungsform kann an Stelle einer Diamantbeschichtung auch eine Schicht aus einem transparenten oder transluzenten Kunststoff, insbesondere Polyethylen eingesetzt werden.

In einer weiteren vorteilhaften Ausgestaltung werden die mit einer Beschichtung versehbaren ATR-Körper-Materialien ausgewählt aus Saphir, Cadmiumtellurid, Thalliumbromid-Jodid, Silizium, Germanium, Zinksulphid, Zinkselenid Magnesiumdifluorid, Cäsiumjodid, Silberchlorid, Kalziumdifluorid, Kaliumbromid und Natriumchlorid, wobei Zinkselenid und Zinksulfid bevorzugt sind.

Insbesondere auch dadurch, daß bei den erfindungsgemäßen Infrarotmeßvorrichtungen elektromagnetische Strahlung von zwei oder mehreren Frequenzen gleichzeitig oder nahezu gleichzeitig eingesetzt werden kann, wird sowohl beim Einsatz als Meßzelle wie auch insbesondere bei Verwendung als Tauchsonde stets nur kurzfristig und im allgemeinen zerstörungsfrei in das zu untersuchende System eingegriffen.

In einer Ausführungsform der Erfindung stellt die Meßeinheit eine druckstabile Meßeinheit dar. Eine erfindungsgemäße Meßeinheit, insbesondere Meßzelle, zeichnet sich demgemäß auch dadurch aus, daß die Meßeinheit mindestens einen ATR-Körper enthält, der mindestens zwei ebene, im wesentlichen parallele Begrenzungsflächen umfaßt, der für die Meßstrahlung transparent ist und der einen Brechungsindex aufweist, der größer ist als der eines an mindestens eine Begrenzungsfläche angrenzenden, zu untersuchenden Mediums, insbesondere größer oder gleich 1.5, wobei die Meßeinheit druckstabil ist. Druckstabil im Sinne der vorliegenden Erfindung soll auch umfassen, daß die Meßeinheit auch bei hohen Außen- wie auch hohen Innendrücken im wesentlichen einwandfrei funktioniert, daß z.B. keine Undichtigkeiten oder Beschädigungen auftreten und daß der Meßvorgang nicht durch hohe Außendrücke gestört wird. Bevorzugt wird auf Meßeinheiten, insbesondere Meßzellen, vor allem Durchflußzellen, sowie Tauchsonden zurückgegriffen, die auch bei insbesondere Außendrücken bis etwa 100 bar noch druckstabil sind. Als besonders zweckmäßig haben sich solche Meßeinheiten erwiesen, die im Bereich von 1 bis 25 bar druckstabil sind. Insbesondere haben auch die ATR-Körper als solche druckstabil ausgeführt zu sein und beispielsweise über angemessene Stärken zu verfügen. Druckstabile Meßeinheiten eignen sich beispielsweise für den Einsatz in der Prozeßanalytik, z.B. um ohne die Herstellbedingungen zu ändern, den tatsächlichen Fortgang des Herstellprozesses in Echtzeit verfolgen zu können. Druckstabile Meßeinheiten können demgemäß bei der Getränkeherstellung, z.B. bei der Bierherstellung, oder auch bei chemischen Verfahren eingesetzt werden. Hierbei ist auch von Vorteil, daß sich mit der erfindungsgemäßen Meßvorrichtung unter Zuhilfenahme einer druckstabilen Meßeinheit polare Substanzen, z.B. Kohlenhydrate und Alkohole, qualitativ und quantitativ bestimmen lassen.

Mit der erfindungsgemäßen Infrarotmeßvorrichtung lassen sich sowohl einzelne Inhaltsstoffe als auch komplexe Mischungen an Inhaltsstoffen in Probesystemen eindeutig und exakt unter Verwendung von elektromagnetischer Strahlung im mittleren Infrarotbereich untersuchen und charakterisieren, wobei es gelingt, Inhaltsstoffe insbesondere in wässrigen Systemen qualitativ und/oder quantitativ zu bestimmen.

Damit liegt erstmalig auch eine, insbesondere auch im On-line-Betrieb einsetzbare, InfrarotMeßvorrichtung vor, die für die Analyse von wässrigen Systemen, wie insbesondere Bier, Wein, Spirituosen, Softdrinks, Fruchtsäften, Abwasser, Waschlaugen, Prozeßflüssigkeiten oder Körperflüssigkeiten, wie Blut, Speichel, Lymphe oder Urin, eingesetzt werden kann. Beispielsweise ist es möglich, den Zucker- und/oder den Alkoholgehalt, beispielsweise den Glucose- und/oder Ethanolgehalt, in Flüssigkeiten gleichzeitig bzw. nahezu gleichzeitig zu bestimmen. Bei Kenntnis der in einer Probe möglicherweise vorliegenden Inhaltsstoffe kann die Suche nach zu detektierenden Signalen auf ganz bestimmte Frequenzen bzw. Frequenzbereiche eingeschränkt werden, wodurch sehr hohe Empfindlichkeiten zu erzielen sind. Beispielsweise können mit Hilfe der erfindungsgemäßen Infrarotmeßvorrichtung auch in wässrigen Systemen nebeneinander vorliegende unterschiedliche Saccharidverbindungen, wie z.B. Fructose, Glucose und Galaktose, identifiziert werden.

In einer bevorzugten Ausgestaltung der Erfindung werden z.B. Inhaltsstoffe von Getränken, wie Bier, Wein, Spirituosen, Milch, Milchprodukten, Softdrinks oder Fruchtsäften, bei der Herstellung bzw. Verarbeitung und/oder beim Abfüllen mit Hilfe der erfindungsgemäßen FT-IR-Meßvorrichtung unter Verwendung einer Durchflußzelle qualitativ und quantitativ bestimmt. Bei diesen, gegebenenfalls auch nebeneinander vorliegenden Inhaltsstoffen kann es sich z.B. um Alkohle, wie Ethanol, Methanol, Propanol oder Butanol, Kohlenhydrate, Kohlensäure und/oder Proteine handeln, wobei die Inhaltsstoffe unabhängig von ihrer Größe nebeneinander analysierbar sind.

In einer erfindungsgemäßen Ausgestaltung wird die erfindungsgemäße Vorrichtung dazu genutzt, die Inhaltsstoffe von Obst und Gemüse quantitativ und/oder qualitativ zu bestimmen. Dabei kann in einer Ausführungsform eine ebene Fläche eines ATR-Körpers einer Meßeinheit auf das, beispielsweise frisch aufgeschnittene, Fruchtfleisch von Obst oder Gemüse aufgelegt oder eingepreßt werden. In gleicher Weise kann z.B. auch der Reifegrad von Trauben bestimmt werden, indem der in Wirkverbindung mit einer erfindungsgemäßen Infrarotmeßvorrichtung stehende ATR-Körper, beispielsweise in Ausgestaltung einer Tauchsonde, in direktem Kontakt mit dem Fruchtfleisch gebracht oder in dieses eingetaucht wird.

Die erfindungsgemäße Infrarotmeßvorrichtung ist insbesondere auch für die Bestimmung von Inhaltsstoffen insbesondere in der Medizin oder der Tiermedizin besonders geeignet. Beispielsweise können aus Körperflüssigkeiten wie Blut, Urin, Speichel oder Lymphe Inhaltsstoffe qualitativ und/oder quantitativ detektiert werden. Auf diese Weise werden Voraussetzungen für eine schnelle Diagnose geschaffen. So können beispielsweise mit Hilfe einer Durchflußzelle, falls gewünscht sogar On-line, das heißt im Echtzeitmodus, Blutinhaltsstoffe wie Glucose, Harnstoffe, Kreatinin oder Triglyceride sowie Alkohole, z.B. Ethanol, bestimmt werden. Demgemäß eignet sich die erfindungsgemäße Infrarotmeßvorrichtung z.B. auch für den Einsatz bei der Dialyse. Das ausgetauschte Blut kann fortwährend auf insbesondere relevante oder kritische Inhaltsstoffe untersucht und der Zeitpunkt, zu dem das Blut hinreichend gereinigt ist, exakt ermittelt werden. Hierdurch entfallen unnötig lange Dialysezeiten. Auch aufgrund der klein dimensionierbaren ATR-Körper ist es unproblematisch, für die Verwendung bei der Dialyse auf wegwerfbare oder recycelbare Durchflußzellen zurückzugreifen. Zweckmäßigerweise ist eine solche Durchflußzelle als Modul ausgestaltet, das ohne weiteres in eine Meßstrecke, z.B. in eine blutleitende Kanüle, integriert werden kann.

Aufschluß über den Zustand des bei der Dialyse zu reinigenden Blutes kann darüber hinaus auch durch die mit Hilfe der erfindungsgemäßen Infrarotmeßvorrichtung vorgenommene spektroskopische Untersuchung der bei der Blutreinigung anfallenden Wasch- bzw. Austauschflüssigkeit liefern. Erfindungsgemäß wird besagte Meßvorrichtung auch für die Bestimmung von Inhaltsstoffen in dieser Waschflüssigkeit eingesetzt. Hiermit geht der Vorteil einher, daß die Messung nicht mehr unter sterilen Bedingungen stattzufinden hat, gleichwohl schnelle Aussagen über den Zustand des gereinigten Blutes möglich gemacht werden.

Für die Bestimmung z.B. der vorhergehend genannten Blutinhaltsstoffe mit der erfindungsgemäßen Vorrichtung reichen aber auch bereits Mengen aus von < 20 µl, wenn die erfindungsgemäße Meßvorrichtung enthaltend den Quantenkaskadenlaser zum Einsatz kommt, um exakte Angaben darüber zu erhalten, welche Substanzen gegebenenfalls in welcher Konzentration z.B. im Blut vorliegen. Im Gegensatz zu herkömmlichen Blutanalyseverfahren ist man auf wesentlich geringere Mengen an Blut angewiesen und kommt darüber hinaus auch ohne weitere Verbrauchsmittel wie Sptitzenkörper und -kanülen aus. Zudem gestaltet sich die Entnahme kleiner Mengen an Blut wesentlich einfacher, z.B. auch im Hinblick auf die Einhaltung steriler Bedingungen.

In einer weiteren erfindungsgemäßen Ausführungsform ist ein Urinal gemäß den Merkmalen des Anspruchs 26 vorgesehen. Eine Meßeinheit, umfassend den ATR-Kötper, kann z.B. im Urinal selber oder in der herkömmlichen Abflußleitung des Urinals angebracht sein, liegt jedoch vorzugsweise in einer separaten oder von der Abflußleitung abgezweigten Leitung vor. Es reichen für diese Ausführungsform mindestens sechs oder sieben an der Begrenzungswand zum Medium abgeschwächt totalreflektierte Meßstrahlen für ein zuverlässiges Ergebnis aus.

Um reproduzierbare Daten zu erhalten, ist die Meßzelle zweckmäßigerweise als Durchflußzelle mit einem reversibel verschließbaren Ein- und Ausgang ausgestattet. Zudem hat es sich als vorteilhaft erwiesen, wenn die Meßeinheit bzw. -zelle, beispielsweise über entsprechende Kanalsysteme, thermostatiert werden kann. Weiterhin ist es von Vorteil, wenn ein Mittel zum Reinigen der Meßeinheit mit z.B. Reinigungsflüssigkeit und/oder Wasser sowie gegebenenfalls ein Mittel zum Trocknen der Meßeinheit, z.B. ein Gebläse vorgesehen sind.

Ferner hat eine weitere erfindungsgemäße Ausführungsform ein Klosett gemäß den Merkmalen des Anspruchs 27 zum Gegenstand. Es reichen für diese Ausführungsform mindestens sechs oder sieben an der Begrenzungswand zum Medium abgeschwächt totalreflektierte Meßstrahlen für ein zuverlässiges Ergebnis aus. Die erfindungsgemäße Infrarotmeßvorrichtung oder eine Meßeinheit können z.B. entweder in die Abflußleitung des Klosetts integriert sein oder, was bevorzugt ist, in einer separaten oder von der Abflußleitung abgezweigten Leitung vorliegen. Wie beim vorhergehend beschriebenen Urinal kann auch die beim Klosett verwendete Meßzelle thermostatierbar sein. Mit der vorhergehend beschriebenen Kot-Analyse lassen sich z.B. charakteristische Angaben im Hinblick auf die vorliegenden Fette sowie deren Gehalte ermitteln. In den beiden vorhergehend beschriebenen Ausführungsformen steht die Meßeinheit vorzugsweise mit einer über ein Ventil regelbaren Zuleitung für Reinigungsflüssigkeit in Verbindung, mit der nach jedem Meßvorgang die Meßeinheit/Meßzelle, insbesondere der ATR-Körper, gereinigt wird.

Erfindungsgemäß ist weiterhin im Analyseautomat gemäß den Merkmalen des Anspruchs 28 vorgesehen. Dieser Analyseautomat umfaßt neben besagter Meßzelle eine Spül- sowie eine Trockenvorrichtung für den ATR-Körper. Auf diese Weise kann z.B. eine Durchflußzelle bzw. eine verschließbare Durchflußzelle oder auch eine Tauchsonde nach dem Meßvorgang gereinigt und für die Folgemessung präpariert werden. Das vorhergehend beschriebene automatisierte Meßverfahren ermöglicht sehr kurze Meßzyklen. Beispielsweise reichen pro Meßvorgang bereits etwa 10 Sekunden aus, um beispielsweise sechs Inhaltsstoffe, z.B. im Blut oder Urin, bestimmen zu können. Somit kann unter Verwendung der erfindungsgemäßen Meßvorrichtung eine Vielzahl an Proben automatisiert infrarotspektroskopisch vermessen werden.

Die erfindungsgemäße IR-Meßvorrichtung ist für die Bestimmung von Inhaltsstoffen insbesondere in der Lebensmittelanalytik, der Medizin oder der Tiermedizin besonders geeignet. Beispielsweise können aus Körperflüssigkeiten wie Blut, Urin, Speichel oder Lymphe Inhaltsstoffe qualitativ und/oder quantitativ detektiert werden. Auf diese Weise werden Voraussetzungen für eine schnelle Diagnose geschaffen. So können beispielsweise mit Hilfe einer Durchflußzelle, falls gewünscht sogar On-line, das heißt im Echtzeitmodus, Blutinhaltsstoffe wie Glucose, Harnstoffe, Kreatinin oder Triglyceride sowie Alkohole, z.B. Ethanol, bestimmt werden. Demgemäß eignet sich die erfindungsgemäße Infrarotmeßvorrichtung z.B. auch für den Einsatz bei der Dialyse. Das ausgetauschte Blut kann fortwährend auf insbesondere relevante oder kritische Inhaltsstoffe untersucht und der Zeitpunkt, zu dem das Blut hinreichend gereinigt ist, exakt ermittelt werden. Hierdurch entfallen unnötig lange Dialysezeiten. Auch aufgrund der klein dimensionierbaren ATR-Körper ist es unproblematisch, für die Verwendung bei der Dialyse auf wegwerfbare oder recycelbare Durchflußzehen zurückzugreifen. Zweckmäßigerweise ist eine solche Durchflußzelle als Modul ausgestaltet, das ohne weiteres in eine Meßstrecke, z.B. in eine blutleitende Kanüle, integriert werden kann.

Aufschluß über den Zustand des bei der Dialyse zu reinigenden Blutes kann darüber hinaus auch durch die mit Hilfe der erfindungsgemäßen Infrarotmeßvorrichtung vorgenommene spektroskopische Untersuchung der bei der Blutreinigung anfallenden Wasch- bzw. Austauschflüssigkeit liefern. Erfindungsgemäß wird besagte Meßvorrichtung auch für die Bestimmung von Inhaltsstoffen in dieser Waschflüssigkeit eingesetzt. Hiermit geht der Vorteil einher, daß die Messung nicht mehr unter sterilen Bedingungen stattzufinden hat, gleichwohl schnelle Aussagen über den Zustand des gereinigten Blutes möglich gemacht werden.

Als Detektoren für die Registrierung der Meßstrahlung kann auf alle gängigen, in Infrarotmeßvorrichtungen zum Einsatz kommenden Systeme zurückgegriffen werden. In einer weiteren Ausführungsform können auch Detektoren, wie aus der photoakustischen Spektroskopie bekannt, eingesetzt werden. Einzelheiten zur photoakustischen Spektroskopie sind dem Fachmann bekannt und sind zum Beispiel in "Optische Spektroskopie", VCH Verlagsgesellschaft, Weinheim, 1994, Kap. 6, beschrieben.

Mit den erfindungsgemäßen Meßvorrichtungen gelingt es, die Meßapparatur erheblich zu miniaturisieren, ohne selbst bei der Analyse wässriger Mehrkomponentensysteme Einbußen bei der Meßgenauigkeit oder -qualität hinnehmen zu müssen. Dabei stellen auch die sehr ausgeprägten Wasserbanden im Infraroten keine Beeinträchtigung mehr dar. Beispielsweise sind mit den erfindungsgemäßen Vorrichtungen wellenlängenspezifisch Signale detektierbar bzw. unterscheidbar, die sich in ihren Intensitäten um ein Vielfaches oder gar um eine oder mehrere Größenordnungen, beispielsweise um den Faktor 1000 unterscheiden. Folglich lassen sich mit diesen Vorrichtungen z.B. Mehrkomponentensysteme analysieren, die ein starkes Grundrauschen verursachen. Zudem gelingt mit diesen Vorrichtungen ein sehr hoher Lichtdurchsatz.

Zur Detektion einer Substanz reicht jeweils bereits Meßstrahlung einer bestimmten Wellenlänge aus. Unabhängig davon, wieviele Substanzen analysiert werden, ist es stets ausreichend, nur einen einzigen Referenzmeßstrahl für eine exakte qualitative und quantitative Bestimmung einzusetzen. Werden also z.B. n Substanzen mit n Meßstrahlen, die sich jeweils in ihrer Wellenlänge unterscheiden, analysiert, reicht ein einzelner Referenzmeßstrahl zur Vervollständigung der Messung, so daß insgesamt nur n+1 Strahlen zu verwenden sind.

Schließlich sind mit den erfindungsgemäßen Vorrichtungen bereits anhand der wellenlängenspezifischen Intensitätsinformationen alle für eine vollständige Analyse erforderlichen Angaben erhältlich, ohne daß es vorliegend der Auswertung der Polarisationseigenschaften der Meßstrahlung bedürfte.

Weitere Ausführungsformen der Erfindung werden anhand der nachfolgenden Abbildungen im Detail beschrieben, ohne daß die Erfindung auf diese besonderen Ausgestaltungen beschränkt sein soll. Es zeigen
- Figur 1: eine erfindungsgemäße Infrarotmeßvorrichtung mit Durchflußzelle in schematischer Darstellung;
- Figur 2: eine erfindungsgemäße Meßeinheit in schematischer Darstellung im Längsschnitt; und
- Figur 3: einen Längsschnitt durch einen beschichteten ATR-Körper.

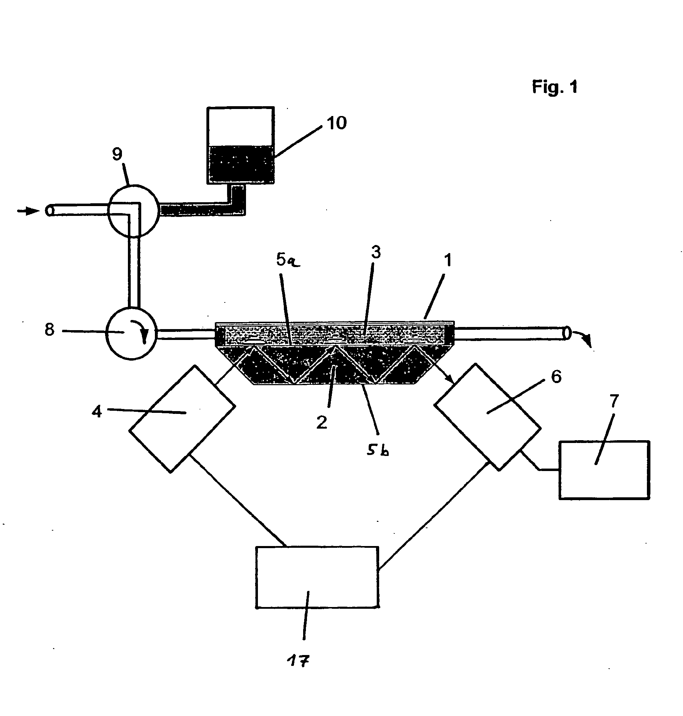

Wie Figur 1 zu entnehmen ist, kann eine erfindungsgemäße Infrarotmeßvorrichtung in einer Ausführungsform mit einer Durchflußzelle 1 ausgestattet sein. Eine Längswand 5a der Durchflußzelle 1 wird von einem ATR-Körper 2 mit trapezförmigem Querschnitt gebildet. Der ebenen Begrenzungsfläche 5a liegt eine die Rückseite des ATR-Körpers begrenzende parallele Wandungsfläche 5b gegenüber. Die Durchflußzelle 1 ist mit einem zylinderförmigen Kanal 3 ausgestattet, der vorliegend geradlinig durch die Durchflußzelle 1 geführt wird. Ein Lichtstrahl wird über den Quantenkaskadenlaser 4 über die Schmalseite des ATR-Körpers 2 eingeführt und trifft auf die ebene Begrenzungsfläche 5a, an die das zu untersuchende Medium angrenzt. Nach mindestens sechs- oder siebenmaliger abgeschwächter Totalreflektion entlang der Meßstrecke wird der austretende Lichtstrahl mit Hilfe eines Detektors 6 registriert und das Signal an eine Auswerteeinheit 7 weitergegeben. Nicht abgebildet bei der Strahlungsquelle bzw. dem Detektor ist jeweils eine Spiegeloptik, mit deren Hilfe z.B. die Strahlführung optimiert und gesteuert wird. Geeignete Spiegeloptiken sind dem Fachmann jedoch hinlänglich bekannt, insbesondere auch im Zusammenhang mit Infrarotspektrometern. Der Durchfluß des Probemediums wird unterstützt durch eine Pumpe 8, bei der es sich beispielsweise um eine Peristaltik- oder Piezopumpe handeln kann. Über ein Steuerventil 9 kann wahlweise entweder das zu analysierende Medium oder eine Spül- oder Referenzlösung, die auch einem separaten Behältnis 10 entstammen kann, durch die Durchflußzelle geleitet werden. Falls die Meßlösung auch quantitativ vermessen werden soll, empfiehlt es sich, auch ein Gebläse (nicht abgebildet) vorzusehen, um insbesondere den ATR-Körper vor jeder neuen Messung trocken zu blasen.

In einer besonderen Ausgestaltung kann es sich bei der Durchflußzelle 1 um eine solche handeln, die ausgewechselt, das heißt durch eine andere Durchflußzelle, z.B. auch mit einem unterschiedlichen ATR-Körper ersetzt, werden kann. Auswechselbare Durchflußzellen kommen insbesondere immer dann zur Anwendung, wenn sichergestellt werden soll, daß sterile Bedingungen eingehalten werden und/oder das Meßergebnis auf gar keinen Fall durch gegebenenfalls auf der Oberfläche des ATR-Körpers haften gebliebene Rückstände der zuvor vermessenen Probe verfälscht werden soll, beispielsweise bei der Dialyse. Die ausgewechselten Durchflußzellen können entweder entsorgt oder recycelt werden.

Weiterhin kann gemäß einer bevorzugten Ausgestaltung ein optischer Multiplexer 17 vorgesehen sein, der zum einen wellenlängenspezifisch die Abstrahlungsfolge bzw. das Abstrahlungsmuster und/oder die Intensitäten der Meßstrahlung des Quantenkaskandenlasers 4 steuert und mit diesem in Wirkverbindung steht und der zum anderen ebenfalls wellenlängenspezifisch den Detektor 6 und/oder die Auswerteeinheit 7, z.B. die gleichzeitige und/oder sequentielle Detektierung der Meßstrahlung, regelt.

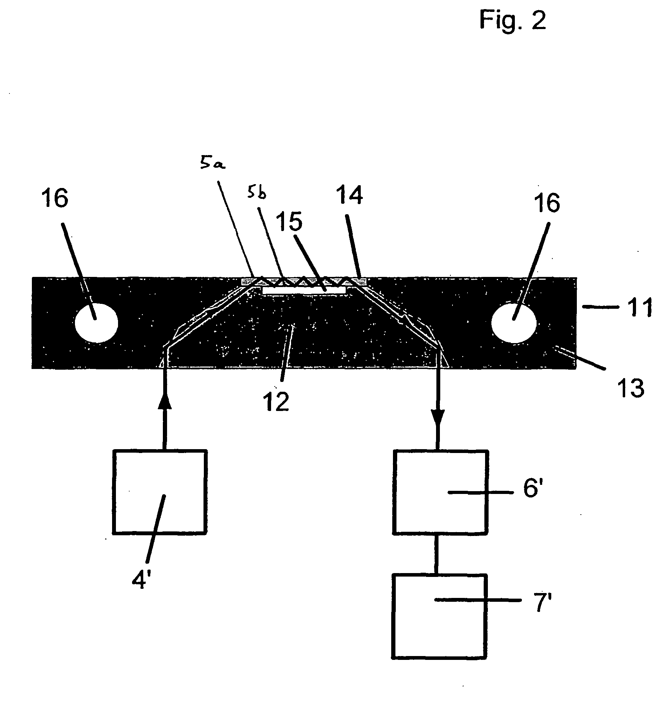

Figur 2 ist eine Meßeinheit 11 zu entnehmen, in der ein beschichteter, zweiteiliger ATR-Körper 12 aus im wesentlichen Zinkselenid in einen Halter 13 eingelassen ist. Der ATR-Grundkörper 12 aus Zinkselenid ist mit einer Schicht bzw. einem separaten ATR-Körper, insbesondere in Plattenform, 14 aus Diamant versehen, deren eine ebene Begrenzungsfläche 5a mit dem zu analysierenden Medium in Verbindung kommt und deren hierzu parallele Begrenzungsfläche 5b im Inneren des ATR-Körpers einen evakuierten oder mit Luft oder Gas gefüllten Hohlraum 15 abgrenzt. Der ATR-Grundkörper 12 verfügt über mehrere ebene Begrenzungsflächen, an denen der einfallende Infrarotstrahl reflektiert wird. Der Halter 11 kann einen Kanal oder ein Kanalsystem 16 zur Thermostatierung der Meßzelle aufweisen. Der Infrarotstrahl nimmt wiederum seinen Ausgang bei der Lichtquelle 4' in Form eines Quantenkaskadenlasers und wird über die Detektoreinheit 6' registriert. Das bzw. die detektierten Signale werden in der Auswerteeinheit 7' analysiert bzw. aufbereitet. Um mit der abgebildeten Meßeinheit hinreichend genaue infrarotspektrometrische Untersuchungen vornehmen zu können, reicht es aus, wenn die Seitenlänge bzw. der Durchmesser der dem Medium zugewandten Begrenzungsfläche, d.h. die Meßstrecke der Diamantschicht im Bereich von etwa 4 bis 5 mm liegt. Probenvolumina < 100 µl sowie selbst solche im Bereich von 5 bis 50 µl, also z. B. 10 µl, können ohne weiteres mit der dargestellten Meßzelle auf das Vorliegen einer oder mehrerer Substanzen untersucht werden. Mehrere Substanzen können gleichzeitig nebeneinander bestimmt werden. Selbstverständlich kann ebenfalls ein Multiplexer 17 gemäß Figur 1 vorgesehen sein (nicht abgebildet).

Die erfindungsgemäße Infrarotmeßvorrichtung erlaubt damit erstmals einen einfachen verläßlichen und kostengünstigen Zugang für die Analyse und Charakterisierung von insbesondere polaren Substanzen, z.B. solchen mit Hydroxyfunktionen, selbst in wässrigen Systemen mit hoher Genauigkeit. Von Vorteil ist weiterhin, daß auch kleinste Probemengen insbesondere auch kontinuierlich detektiert werden können. Als vorteilhaft hat sich ebenfalls erwiesen, daß die erfindungsgemäße Infrarotmeßvorrichtung, insbesondere die verwendete Meßeinheit sowie die Kombination aus Meßeinheit und Quantenkaskadenlaser, gegebenenfalls auch unter Einschluß eines Detektors oder optischen Multiplexers, extrem erschütterungsunempfindlich ist und darüber hinaus eine miniaturisierte Bauweise erlaubt.

In einer besonderen Ausgestaltung kann es sich bei der Durchflußzelle 1 um eine solche handeln, die ausgewechselt, das heißt durch eine andere Durchflußzelle, z.B. auch mit einem unterschiedlichen ATR-Körper ersetzt, werden kann.

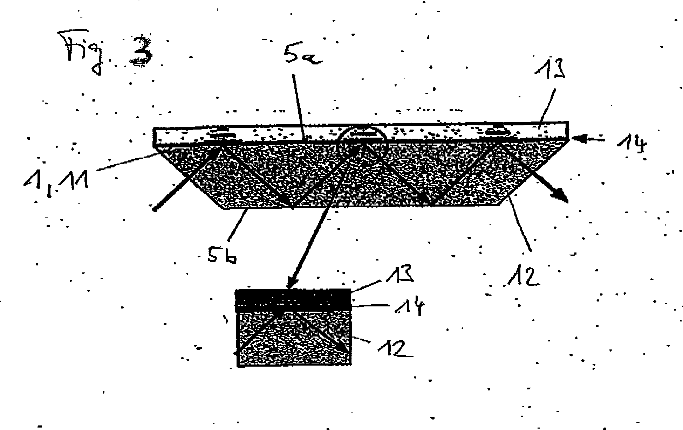

Gemäß Figur 3 kann eine Meßeinheit 1, 11 einen ATR-Körper 12, insbesondere mit trapezförmigem Querschnitt, umfassen, der auf derjenigen ebenen Begrenzungsfläche 5a, die dem Probenmedium ausgesetzt ist, mit einer Beschichtung 14, insbesondere einer Diamantschicht, versehen ist. An die Beschichtung schließt sich ein Raum 13 zur Aufnahme von Probenflüssigkeit an, der auch als Rohr bzw. Rohrleitung ausgestaltet sein kann, womit die Meßeinheit 11 auch eine Durchflußzelle darstellen kann. Figur 3 ist darüber hinaus ein Ausschnitt im Bereich der beschichteten Begrenzungsfläche in vergrößerter Darstellung zu entnehmen.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Inftarotmeßvorrichtung zur gleichzeitigen Bestimmung von Inhaltsstoffen in nicht-wässrigen und wässrigen Systemen, umfassend mindestens eine computergestützte Auswerteeinheit (7, 7'), mindestens einen Detektor (6, 6') und mindestens eine Meßeinheit, umfassend mindestens einen ATR-Körper und mindestens eine Infrarot-Lichtquelle, wobei die Meßeinheit mindesten einen ATR-Körper (2) enthält, der mindestens zwei ebene, parallele Begrenzungsflächen (5a, 5b) umfaßt, der für die Meßstrahlung transparent oder teilweise transparent ist und der einen Brechungsindex aufweist, der größer ist als der eines an mindestens eine Begrenzungsfläche angrenzenden, zu untersuchenden Mediums, wobei die IR-Meßstrahlung an mindestens einer der ebenen, parallelen Begrenzungsflächen (5a) des ATR-Körpers (2) mindestens sechsmal abgeschwächt totalreflektierbar ist, **dadurch gekennzeichnet, daß** die Infrarot-Lichtquelle einen oder mehrere Quantenkaskadenlaser (4, 4') und die IR-Meßstrahlung Mittel-Infrarotstrahlung (MIR) darstellen und daß von einem oder mehreren Quantenkaskadenlasern (4, 4') elektromagnetische Strahlung unterschiedlicher Frequenzen aus dem Mittel-Infrarotbereich mit jeweils vorgegebener, definierter Intensität oder unterschiedlicher Frequenzbänder aus dem Mittel-Infrarotbereich mit jeweils vorgegebener, definierter Intensität abstrahlbar ist.

2. Infrarotmeßvorrichtung nach Anspruch 1, **dadurch gekennzeichnet, daß**
die Auswerteeinheit (7, 7') gegen eine zweite oder eine weitere Auswerteeinheit (7, 7') auswechselbar ist.

3. Tnfrarotmeßvorrichtung nach Anspruch 1 oder 2, **dadurch gekennzeichnet, daß**
über die Auswerteeinheit (7, 7') Faktoranalysen, Multiple Least Square Algorithmen oder neuronale Netzwerk-Analysen auf der Basis der beim Detektor (6, 6') eingehenden Signale für deren Auswertung durchführbar sind.

4. Infrarotmeßvorrichtung nach einem der vorangehenden Ansprüche, **dadurch gekennzeichnet, daß**
von dem oder den Quantenkaskadenlaser(n) (4, 4') elektromagnetische Strahlung mindestens einer definierten Frequenz mit vorgegebener, definierter Intensität oder mindestens eines definierten Frequenzbandes mit vorgegebener, definierter Intensität abstrahlbar ist.

5. Infrarotmeßvorrichtung nach einem der vorangehenden Ansprüche, **dadurch gekennzeichnet, daß**
von zwei oder mehreren Quantenkaskadenlasern (4, 4') elektromagnetische Strahlung unterschiedlicher Frequenzen aus dem Mittel-Infrarotbereich mit jeweils vorgegebener, definierter Intensität oder unterschiedlicher Frequenzbänder aus dem Mittel-Infrarotbereich mit jeweils vorgegebener, definierter Intensität abstrahlbar ist.

6. Infrarotmeßvorrichtung nach Anspruch 5, **dadurch gekennzeichnet, daß**
von mindestens zwei Quantenkaskadenlasern (4, 4') elektromagnetische Strahlung unterschiedlicher Frequenz aus dem Mittel-Infrarotbereich mit jeweils vorgegebener, definierter Intensität oder unterschiedlicher Frequenzbänder aus dem Mittel-Infrarotbereich mit jeweils vorgegebener, definierter Intensität zeitgleich oder nahezu zeitgleich abstrahlbar ist.

7. Infrarotmeßvorrichtung nach einem der vorangehenden Ansprüche, **dadurch gekennzeichnet, daß**
von einem Quantenkaskadenlaser (4, 4') emittierte elektromagnetische Strahlung in Form von Pulsen mit definierter Zeitdauer mit jeweils vorgegebener, definierter Intensität abgebbar ist.

8. Infrarotmeßvorrichtung nach Anspruch 7, **dadurch gekennzeichnet, daß**
die Dauer der Pulse, insbesondere bei elektromagnetischer Strahlung unterschiedlicher Frequenzen oder Frequenzbänder, unterschiedlich lang und/oder die Intensität der Pulse unterschiedlich stark ist.

9. Infrarotmeßvorrichtung nach Anspruch 7 oder 8, **dadurch gekennzeichnet, daß** unterschiedliche Frequenzen oder Frequenzbänder der von einem oder von mehreren Quantenkaskadenlasern (4, 4') herrührenden elektromagnetischen Strahlung in sequentieller oder beliebiger Abfolge abstrahlbar sind.

10. Infrarotmeßvorrichtung nach Anspruch 9, **dadurch gekennzeichnet, daß**
die elektromagnetische Meßstrahlung und/oder deren Intensität gemäß einem Multiplex-Muster wellenlängenspezifisch steuerbar, pulsweise abstrahlbar oder gemäß einem Multiplex-Muster korrespondierend zu dem Multiplex-Muster der gepulsten Meßstrahlung detektierbar ist.

11. Infrarotmeßvorrichtung nach einem der vorangehenden Ansprüche, **dadurch gekennzeichnet, daß**
die Meßeinheit (1) eine druckstabile Durchflußzelle oder eine im Eingangs- und Ausgangsbereich jeweils reversibel verschließbare druckstabile Durchflußzelle oder daß die Meßeinheit (1) oder der ATR-Körper (2) eine druckstabile Tauchsonde darstellt.

12. Infrarotmeßvorrichtung nach einem der vorangehenden Ansprüche, **dadurch gekennzeichnet, daß**
der ATR-Körper (2) aus Diamant, Saphir, Cadmiumtellurid, Thalliumbromid-Jodid, Silizium, Germanium, Zinkselenid, Zinksulphid, Magnesiumdifluorid, Cäsiumjodid, Silberchlorid, Calziumdifluorid, Kaliumbromid, Natriumchlorid oder einem für Infrarotstrahlung transparenten Werkstoff mit einem Brechungsindex vorzugsweise ≥ 1.5 gebildet wird.

13. Infrarotmeßvorrichtung nach Anspruch 12, **dadurch gekennzeichnet, daß**
der für die Infrarotstrahlung transparente Werkstoff ein Polymerwerkstoff ist.

14. Infrarotmeßvorrichtung nach Anspruch 13, **dadurch gekennzeichnet, daß**
der Polymerwerkstoff Polyethylen ist.

15. Infrarotmeßvorrichtung nach einem der vorangehenden Ansprüche, **dadurch gekennzeichnet, daß**
wenigstens der ATR-Körper (2) und/oder die Meßeinheit (1) thermostatierbar ist bzw. sind.

16. Infrarotmeßvorrichtung nach einem der vorangehenden Ansprüche, **dadurch gekennzeichnet, daß**
die Meßeinheit (1) druckstabil ist gegenüber Drücken bis zu 100 bar.

17. Infrarotmeßvorrichtung nach einem der vorangehenden Ansprüche, **dadurch gekennzeichnet, daß**
der ATR-Körper (2, 12) wenigstens auf einer Begrenzungsfläche (5), die dem zu analysierenden Medium aussetzbar ist, eine für das evaneszente Feld der Meßstrahlung transparente Beschichtung (14) umfaßt.

18. Infrarotmeßvorrichtung nach Anspruch 17, **dadurch gekennzeichnet, daß**
die Beschichtung (14) eine Stärke aufweist, die geringer ist als die halbe Wellenlänge der verwendeten Infrarotmeßstrahlung.

19. Infrarotmeßvorrichtung nach Anspruch 18, **dadurch gekennzeichnet, daß**
die Beschichtung (14) eine Stärke im Bereich von 2 nm bis 25 µm aufweist.

20. Infrarotmeßvorrichtung nach Anspruch 18, **dadurch gekennzeichnet, daß**
die Beschichtung (14) eine Stärke im Bereich von 2 µm bis 10 µm aufweist.

21. Infrarotmeßvorrichtung nach einem der Ansprüche 17 bis 20, **dadurch gekennzeichnet, daß**
die Beschichtung (14) eine Diamantenschicht umfaßt und daß der beschichtete ATR-Körper Zinkselenid oder Zinksulfid umfaßt.

22. Infrarotmeßvorrichtung nach einem der vorangehenden Ansprüche, **dadurch gekennzeichnet, daß**
der Detektor (6, 6') einen photoakustischen Detektor umfaßt

23. Verwendung der Inftarotmeßvorrichtung nach einem der Ansprüche 1 bis 22 zur gleichzeitigen Bestimmung von Inhaltsstoffen in nicht-wässrigen und wässrigen Systemen.

24. Verwendung nach Anspruch 23, **dadurch gekennzeichnet, daß**
die Inhaltsstoffe Saccharide, Harnstoff, Kreatinin, Triglyceride, Kohlensäure, Proteine, Alkohole oder Phosphorsäureester darstellen.

25. Verwendung nach Anspruch 23 oder 24, wobei als wässeriges System Bier, Wein, Fruchtsaft, Spirituosen oder Softdrinks, Urin, Kot, Lymphe, Speichel, Blut, die bei der Dialyse anfallende Waschflüssigkeit, Prozeßflüssigkeit, Abwasser, Waschlauge, Obst, Gemüse, Milch oder Milchprodukte eingesetzt werden.

26. Urinal, umfassend ein Urinalbecken sowie mindestens eine Abflußleitung, **dadurch gekennzeichnet, daß**
das Urinalbecken oder die Abflußleitung eine Infrarotmeßvorrichtung nach einem der Ansprüche 1 bis 22 enthält.

27. Klosett, umfassend eine Klosettschüssel sowie mindestens eine Abflußleitung, **dadurch gekennzeichnet, daß**
die Klosettschüssel oder die Abflußleitung eine Infrarotmeßvorrichtung nach einem der Ansprüche 1 bis 22 enthält.

28. Analyseautomat, umfassend mindestens eine Infrarotmeßvorrichtung gemäß einem der Ansprüche 1 bis 22, mindestens eine Spülvorrichtung für den ATR-Körper und mindestens eine Trockenvorrichtung für den ATR-Körper.

29. Verfahren zur gleichzeitigen Bestimmung von Inhaltsstoffen in nicht-wäßrigen und wäßrigen Mehrkomponentensystemen unter Verwendung einer Infrarotmeßvorrichtung gemäß einem der Ansprüche 1 bis 22 oder eines Analyseautomaten gemäß Anspruch 28, wobei die Meßstrahlen mindestens sechsmal an einer Meßstrecke mindestens einer ebenen Begrenzungsfläche des ATR-Körpers, die unmittelbar oder über eine Beschichtung an das zu untersuchende Medium des Mehrkomponentensystems angrenzt, abgeschwächt totalreflektiert werden.

30. Verfahren nach Anspruch 29, **dadurch gekennzeichnet, daß**
die Meßstrahlen mindestens siebenmal abgeschwächt totalreflektiert werden.

## Claims

1. Infrared measuring device for simultaneously determining components in nonaqueous and aqueous systems, comprising at least one computer-aided evaluation unit (7, 7'), at least one detector (6, 6') and at least one measuring unit, comprising at least one ATR body and at least one infrared light source, the measuring unit including at least one ATR body (2) which comprises at least two flat, parallel delimiting surfaces (5a, 5b), which is transparent or partially transparent to the measuring radiation, and which has a refractive index which is greater than that of a medium which is adjacent at at least one delimiting surface and is to be examined, it being possible for the IR measuring radiation to be at least six times reflected according to attenuated total reflection at at least one of the flat, parallel delimiting surfaces (5a) of the ATR body (2), **characterized in that** the infrared light source constitutes one or more quantum cascade lasers (4, 4'), and the IR measuring radiation constitutes middle infrared radiation (MIR), and **in that** one or more quantum cascade lasers (4, 4') can emit electromagnetic radiation of different frequencies from the middle infrared region with in each case a prescribed, defined intensity or different frequency bands from the middle infrared region with in each case a prescribed, defined intensity.

2. Infrared measuring device according to Claim 1, **characterized in that** the evaluation unit (7, 7') is exchangeable for a second or a further evaluation unit (7, 7').

3. Infrared measuring device according to Claim 1 or 2, **characterized in that** from the evaluation unit (7, 7') factor analyses, multiple least square algorithms or neural network analyses on the basis of the signals arriving at the detector (6, 6') in order to evaluate them are conductable.

4. Infrared measuring device according to one of the preceding claims, **characterized in that** with the quantum cascade laser(s) (4, 4') electromagnetic radiation of at least one defined frequency with a prescribed, defined intensity, or of at least one defined frequency band with a prescribed, defined intensity is emittable.

5. Infrared measuring device according to one of the preceding claims, **characterized in that** from two or more quantum cascade lasers (4, 4') electromagnetic radiation of different frequencies from the middle infrared region with in each case a prescribed, defined intensity, or electromagnetic radiation of different frequency bands from the middle infrared region with in each case a predetermined, defined intensity is emittable.

6. Infrared measuring device according to Claim 5, **characterized in that** from at least two quantum cascade lasers (4, 4') simultaneously or virtually simultaneously electromagnetic radiation of different frequency from the middle infrared region with in each case a prescribed, defined intensity, or of different frequency bands from the middle infrared region with in each case a prescribed, defined intensity is emittable.

7. Infrared measuring device according to one of the preceding claims, **characterized in that** electromagnetic radiation emitted by a quantum cascade laser (4, 4') is delivered in the form of pulses of defined time duration with in each case a prescribed, defined intensity.

8. Infrared measuring device according to Claim 7, **characterized in that** the duration of the pulses, particularly in the case of electromagnetic radiation of different frequencies or frequency bands, differs in length, and/or the intensity of the pulses is of different strength.

9. Infrared measuring device according to Claim 7 or 8, **characterized in that** different frequencies or frequency bands of the electromagnetic radiation originating from one or from several quantum cascade lasers (4, 4') is emittable in sequential or arbitrary succession.

10. Infrared measuring device according to Claim 9, **characterized in that** in accordance with a multiplex pattern the electromagnetic measuring radiation and/or its intensity is wavelength specificly controllable, is emittable in a pulsewise fashion, or is detectable in accordance with a multiplex pattern corresponding to the multiplex pattern of the pulsed measuring radiation.

11. Infrared measuring device according to one of the preceding claims, **characterized in that** the measuring unit (1) constitutes a pressure-stable flow cell or a pressure-stable flow cell which can respectively be reversibly sealed in the input and output regions, or in that the measuring unit (1) or the ATR body (2) constitutes a pressure-stable immersion probe.

12. Infrared measuring device according to one of the preceding claims, **characterized in that** the ATR body (2) is formed from diamond, sapphire, cadmium telluride, thallium bromide-iodide, silicon, germanium, zinc selenide, zinc sulphide, magnesium fluoride, caesium iodide, silver chloride, calcium fluoride, potassium bromide, sodium chloride or a material transparent to infrared radiation and having a refractive index preferably of ≥1.5.

13. Infrared measuring device according to Claim 12, **characterized in that** the material transparent to infrared radiation is a polymer material.

14. Infrared measuring device according to Claim 13, **characterized in that** the polymer material is polyethylene.

15. Infrared measuring device according to one of the preceding claims, **characterized in that** at least the ATR body (2) and/or the measuring unit (1) is/are thermostatable.

16. Infrared measuring device according to one of the preceding claims, **characterized in that** the measuring unit (1) is pressure stable for pressures of up to 100 bars.

17. Infrared measuring device according to one of the preceding claims, **characterized in that**, at least on one delimiting surface (5) which is exposable to the medium to be analyzed, the ATR body (2, 12) comprises a coating (14) transparent to the evanescent field of the measuring radiation.

18. Infrared measuring device according to Claim 17, **characterized in that** the coating (14) has a thickness which is less than half the wavelength of the infrared measuring radiation used.

19. Infrared measuring device according to Claim 18, **characterized in that** the coating (14) has a thickness in the range from 2 nm to 25 µm.

20. Infrared measuring device according to Claim 18, **characterized in that** the coating (14) has a thickness in the range of 2 µm to 10 µm.

21. Infrared measuring device according to one of Claims 17 to 20, **characterized in that** the coating (14) comprises a diamond layer, and **in that** the coated ATR body comprises zinc selenide or zinc sulphide.

22. Infrared measuring device according to one of the preceding claims, **characterized in that** the detector (6, 6') comprises a photoacoustic detector.

23. Use of the infrared measuring device according to one of Claims 1 to 22 for the simultaneous determination of components in nonaqueous and aqueous systems.

24. Use according to Claim 23, **characterized in that** the components constitute saccharides, urea, creatinine, triglycerides, carbonic acid, proteins, alcohols or phosphoric acid esters.

25. Use according to Claim 23 or 24, in which use is made as aqueous system of beer, wine, fruit juice, spirits or soft drinks, urine, faeces, lymph, saliva, blood, the washing liquid occurring during dialysis, process liquid, waste water, washing liquor, fruit, vegetables, milk or milk products.

26. Urinal, comprising a urinal basin and at least one discharge line, **characterized in that** the urinal basin or the discharge line contains an infrared measuring device according to one of Claims 1 to 22.

27. Lavatory, comprising a lavatory bowl, and at least one discharge line, **characterized in that** the lavatory bowl or the discharge line contains an infrared measuring device according to one of Claims 1 to 22.

28. Automated analyzer comprising at least one infrared measuring device in accordance with one of Claims 1 to 22, at least one rinsing device for the ATR body, and at least one drying device for the ATR body.

29. Method for simultaneously determining components in nonaqueous and aqueous multicomponent systems by making use of an infrared measuring device in accordance with one of Claims 1 to 22 or of an automated analyzer in accordance with Claim 28, in which the measuring beams are at least six times reflected according to attenuated total reflection at a measuring section of at least one flat delimiting surface of the ATR body which, directly or via a coating, adjoins the medium of the multicomponent system which is to be examined.

30. Method according to Claim 29, **characterized in that** the measuring beams are at least seven times reflected according to attenuated total reflection.

## Revendications

1. Dispositif de mesure à infrarouge pour la détermination simultanée des constituants présents dans des systèmes non aqueux et aqueux, comprenant au moins une unité d'évaluation (7, 7') assistée par ordinateur, au moins un détecteur (6, 6') et au moins une unité de mesure, comprenant au moins un corps ATR (à Réflexion Totale Atténuée) et au moins une source de lumière infrarouge, l'unité de mesure contenant au moins un corps ATR2, qui comprend au moins deux faces de délimitation (5a, 5b) parallèles planes, corps transparents ou partiellement transparents au rayonnement de mesure et présentant un indice de réfraction supérieur à celui d'un milieu à examiner, limitrophe à au moins une surface de délimitation, le rayonnement de mesure IR étant susceptible d'être soumis à une réflexion totale atténuée au moins six fois en au moins l'une des faces de délimitation (5a) parallèle plane du corps ATR (2), **caractérisé en ce que**, la source de lumière infrarouge constitue un ou plusieurs lasers à cascade quantique (4, 4'), et le rayonnement de mesure IR constitue un rayonnement infrarouge moyen (MIR), et **en ce que**, depuis un ou plusieurs lasers à cascade quantique (4, 4'), peut être rayonné un rayonnement électromagnétique de fréquences différentes, depuis la plage d'infrarouges moyens et avec chaque fois une intensité définie prédéterminée, ou des bandes de fréquence différentes depuis la plage infrarouge moyenne avec chaque fois une intensité définie prédéterminée.

2. Dispositif de mesure à infrarouge selon la revendication 1, **caractérisé en ce que** l'unité d'évaluation (7, 7') est remplaçable par une deuxième ou une autre unité d'évaluation (7, 7').

3. Dispositif de mesure à infrarouge selon la revendication 1 ou 2, **caractérisé en ce qu'**on peut effectuer, par l'intermédiaire de l'unité d'évaluation (7, 7'), des analyses factorielles, des analyses à algorithme des moindres carrés multiples, ou des analyses à réseaux neuronaux, sur la base des signaux allant de pair avec le détecteur (6, 6'), pour leur évaluation.

4. Dispositif de mesure à infrarouge selon l'une des revendications précédentes, **caractérisé en ce que**,
depuis le ou les lasers à cascade quantique, peut être rayonné un rayonnement électromagnétique d'au moins une fréquence définie, avec une intensité définie prédéterminée, ou au moins une bande de fréquence définie, avec une intensité définie prédéterminée.

5. Dispositif de mesure à infrarouge selon l'une des revendications précédentes, **caractérisé en ce que**
par les deux lasers à cascade quantique (4, 4') peut être émis un rayonnement électromagnétique de fréquences différentes, depuis la plage d'infrarouges moyens avec chaque fois une intensité définie prédéterminée ou des bandes de fréquences différentes depuis la plage d'infrarouges moyens avec chaque fois une intensité définie prédéterminée.

6. Dispositif de mesure à infrarouge selon la revendication 5, **caractérisé en ce que**
par les au moins deux lasers en cascade quantique (434') peut être émis un rayonnement électromagnétique de fréquence différente, issu de la plage d'infrarouges moyens avec chaque fois une intensité définie prédéterminée ou des bandes de fréquence différentes, issues de la plage d'infrarouges moyens, avec chaque fois une intensité définie prédéterminée, simultanément, ou à peu près simultanément.

7. Dispositif de mesure à infrarouge selon l'une des revendications précédentes, **caractérisé en ce qu'**
un rayonnement électromagnétique, émis par un laser à cascade quantique (4, 4'), peut être délivré sous forme d'impulsions à durée définie, avec chaque fois une intensité définie prédéterminée.

8. Dispositif de mesure à infrarouge selon la revendication 7, **caractérisé en ce que** la durée des impulsions, en particulier en cas de rayonnement électromagnétique, de fréquences différentes ou de bandes de fréquences différentes, est de valeur différente et/ou l'intensité des impulsions est de force différente.

9. Dispositif de mesure à infrarouge selon la revendication 7 ou 8, **caractérisé en ce que** différentes fréquences ou bandes de fréquences du rayonnement électromagnétique, provenant d'un ou plusieurs lasers à cascade quantique (4, 4'), peuvent être émis en rayonnement, en succession séquentielle ou quelconque.

10. Dispositif de mesure à infrarouge selon la revendication 9, **caractérisé en ce que** le rayonnement de mesure électromagnétique et/ou son intensité peut/peuvent être commandé(s) selon un motif multiplex, spécifique aux longueurs d'onde, peut/peuvent être émis en rayonnement pulsé ou peut/peuvent être détecté(s) selon un motif multiplex, correspondant au motif multiplex du rayonnement de mesure pulsé.

11. Dispositif de mesure à infrarouge selon l'une des revendications précédentes, **caractérisé en ce que** l'unité de mesure (1) constitue une cellule à flux stable en pression ou une cellule à flux table en pression dans la zone d'entrée et de sortie, mais pouvant être obturable chaque fois de façon réversible, ou **en ce que** l'unité de mesure 1 ou le corps ATR 2 constitue une sonde immergée stable en pression.

12. Dispositif de mesure à infrarouge selon l'une des revendications précédentes, **caractérisé en ce que** le corps ATR 12 est formé en diamant, saphir, tellurure de cadmium, iodure-bromure de thallium, silicium, germanium, séléniure de zinc, sulfure de zinc, difluorure de magnésium, iodure de césium, chlorure d'argent, difluorure de calcium, bromure de potassium, chlorure de sodium ou un matériau transparent pour le rayonnement infrarouge, ayant un indice de réfraction de préférence supérieur ou égal à 1, 5.

13. Dispositif de mesure à infrarouge selon la revendication 12, **caractérisé en ce que** le matériau transparent au rayonnement infrarouge est un matériau polymère.

14. Dispositif de mesure à infrarouge selon la revendication 13, **caractérisé en ce que** le matériau polymère est du polyéthylène.

15. Dispositif de mesure à infrarouge selon l'une des revendications précédentes, **caractérisé en ce qu'**au moins le corps ATR (2) et/ou l'unité de mesure (1) est, respectivement sont, susceptible(s) d'être thermostaté(s).

16. Dispositif de mesure à infrarouge selon l'une des revendications précédentes, **caractérisé en ce que** l'unité de mesure (1) est stable en pression par rapport à des pressions allant jusqu'à 100 bar.

17. Dispositif de mesure à infrarouge selon l'une des revendications précédentes, **caractérisé en ce que** le corps ATR (2, 12) comprend, au moins sur une face de délimitation (5), susceptible d'être exposée au fluide à analyser, un revêtement (14) transparent pour le champ évanescent du rayonnement de mesure.

18. Dispositif de mesure à infrarouge selon la revendication 17, **caractérisé en ce que** le revêtement (14) présente une épaisseur inférieure à la moitié de la longueur d'onde du rayonnement de mesure à infrarouge utilisé.

19. Dispositif de mesure à infrarouge selon la revendication 18, **caractérisé en ce que** le revêtement (14) présente une épaisseur dans la fourchette de 2 nm avec 25 µm.

20. Dispositif de mesure à infrarouge selon la revendication 18, **caractérisé en ce que** le revêtement (14) présente une épaisseur dans la fourchette de 2 µm avec 10 µm.

21. Dispositif de mesure à infrarouge selon l'une des revendications 17 à 20, **caractérisé en ce que** le revêtement (14) comprend une couche de diamant, et **en ce que** le corps ATR muni d'un revêtement comprend du séléniure de zinc ou du sulfure de zinc.

22. Dispositif de mesure à infrarouge selon l'une des revendications précédentes, **caractérisé en ce que** le détecteur (6, 6') comprend un détecteur photo-acoustique.

23. Utilisation du dispositif de mesure à infrarouge selon l'une des revendications 1 à 22, pour détermination simultanée des composants, dans des systèmes non aqueux et aqueux.

24. Utilisation selon la revendication 23, **caractérisée en ce que** les composants sont les saccharides, l'urée, la créatinine, la triglycéride, l'acide carbonique, les protéines, les alcools ou les esters d'acide phosphorique.

25. Utilisation selon la revendication 23 ou 24, sachant que l'on utilise, comme système aqueux, de la bière, du vin, du jus de fruit, des spiritueux ou des boissons sans alcool, de l'urine, des excréments, de la lymphe, de la salive, du sang, le liquide de lavage produit lors de la dialise, un liquide de processus, des eaux usées, de la lessive de lavage, des fruits, des légumes, du lait ou des produits laitiers.

26. Urinoir comprenant une cuvette d'urinoir, ainsi qu'au moins une conduite d'évacuation, **caractérisé en ce que** la cuvette d'urinoir ou la conduite d'évacuation contient un dispositif de mesure par infrarouge selon l'une des revendications 1 à 22.

27. Cabinet d'aisance, comprenant une clé de cabinet d'aisance ainsi qu'au moins une conduite d'évacuation **caractérisée en ce que** la cuvette de cabinet d'aisance ou la conduite d'évacuation contient un dispositif de mesure à infrarouge selon l'une des revendications 1 à 22.

28. Dispositif automatique d'analyse, comprenant au moins un dispositif de mesure par infrarouge selon l'une des revendications 1 à 22, au moins un dispositif de rinçage pour le corps ATR, et au moins un dispositif de séchage pour le corps ATR.

29. Procédé de détermination simultanée des constituants dans des systèmes à composants multiples non aqueux et aqueux, avec utilisation d'un dispositif de mesure par infrarouge selon l'une des revendications 1 à 12, ou d'un dispositif automatique d'analyse selon la revendication 28, les rayons de mesure étant susceptibles d'être soumis à une réflexion totale atténuée au moins 6 fois sur une veine de mesure d'au moins une surface de délimitation plane du corps ATR, qui est limitrophe, directement ou par l'intermédiaire d'un revêtement, au milieu à examiner du système à composants multiples.

30. Procédé selon la revendication 29, **caractérisé en ce que** les rayons de mesure sont soumis à une réflexion totale atténuée au moins sept fois.
